Europäisches Patentamt

European Patent Office

Office européen des brevets

(19)

(11) Veröffentlichungsnummer: **0 042 916**
**B1**

(12) **EUROPÄISCHE PATENTSCHRIFT**

(45) Veröffentlichungstag der Patentschrift:
**11.09.85**

(21) Anmeldenummer: **81102449.6**

(22) Anmeldetag: **01.04.81**

(51) Int. Cl.⁴: **G 01 B 5/00, G 01 D 3/04**

(54) Anordnung zur steifen Verbindung zwischen einer Antriebswelle und einer Kodierscheibe eines Beobachtungsperiskops.

(30) Priorität: **01.07.80 CH 5055/80**

(43) Veröffentlichungstag der Anmeldung:
**06.01.82 Patentblatt 82/1**

(45) Bekanntmachung des Hinweises auf die Patenterteilung:
**11.09.85 Patentblatt 85/37**

(84) Benannte Vertragsstaaten:
**AT BE CH DE FR GB IT LI NL SE**

(56) Entgegenhaltungen:
**CH - A - 503 346**
**DE - A - 2 140 141**
**DE - A - 2 438 146**
**DE - A - 2 504 183**

(73) Patentinhaber: **CONTRAVES AG,**
**Schaffhauserstrasse 580, CH-8052 Zürich (CH)**

(72) Erfinder: **Arndt, Klaus, Friedackerstrasse 37,**
**CH-8050 Zürich (CH)**

BUNDESDRUCKEREI BERLIN

## Beschreibung

Die Erfindung betrifft eine Anordnung zur steifen Verbindung zwischen einer Antriebswelle und einer Kodierscheibe aus Glas für die Winkel-Kodiereinrichtung eines Beobachtungsperiskops.

Bei einer bekannten Anordnung für ein Präzisions-Meßgerät gemäß DE-A-2 140 141 werden beispielsweise bei einem Fuß eines geodätischen Instruments zwei flächige Bauteile mit untereinander verschiedenen Temperaturkoeffizienten drehsteif miteinander verbunden, indem zwischen den temperaturempfindlichen Bauteilen eine Anzahl im wesentlichen senkrecht zu den Bauteilen angeordnete Stege vorgesehen sind, welche einen Ausgleichsring bilden und in Radialrichtung eine geringe und in Axialrichtung eine größere Steifigkeit aufweisen. Auf diese Art und Weise wird eine drehsteife und eine bestimmte Elastizität zulassende Verbindung zwischen den Bauteilen erreicht. Die bekannte Anordnung zum Verbinden zweier flächiger Bauteile ist für die Verbindung einer Skalenscheibe mit einer Welle jedoch nicht geeignet.

Aus der DE-A-2 438 146 ist für ein Präzisionsmeßgerät eine Skalenscheibe aus Glas mit außerhalb der neutralen Faser auf der Oberfläche angeordneter Teilung bekannt. Durch entsprechende Dimensionierung und Anordnung der Teilung auf der Skalenscheibe wird eine weitestgehende Kompensation der durch Verformung und Verbiegung verursachten Teilungsfehler erreicht. Die Wirkverbindung mit dem eigentlichen Tragkörper und die damit zusammenhängenden mechanischen Spannungen an der Skalenscheibe wird in diesem Fall unvollständig beziehungsweise überhaupt nicht gelöst.

Der Erfindung liegt die Aufgabe zugrunde, eine Anordnung zur steifen Verbindung zwischen einer Antriebswelle und einer Kodierscheibe aus Glas für das eingangs genannte Beobachtungsperiskop zu schaffen, die besonders raumsparend und leicht ausgebildet ist und über einen weiten Temperaturbereich von etwa −55°C bis +105°C eine absolut starre Verbindung der Teile gewährleistet.

Erfindungsgemäß wird diese Aufgabe bei einer Anordnung der eingangs genannten Art gelöst durch einen einerseits mit der Kodierscheibe und andererseits mit der Antriebswelle drehfest verbundenen Ausgleichsring, der einen radial nach außen gerichteten ersten Flansch und in axialer Richtung versetzt dazu angeordnet einen radial nach innen gerichteten zweiten Flansch sowie ein die beiden Flansche miteinander verbindendes zylindrisches Hülsenteil aufweist, wobei der erste Flansch und das Hülsenteil durch mehrere am Umfang verteilte Schlitze in einzelne Ringsegmente unterteil sind.

Weiterbildungen der Erfindung sind in den Ansprüchen 2 und 3 angegeben.

Die mit dem Zwischenschalten des vorzugsweise einstückig ausgebildeten Ausgleichsringes erreichten Vorteile bestehen darin, daß die an den rotationssymmetrischen und aus verschiedenen Materialien mit unterschiedlichen Ausdehnungskoeffizienten bestehenden Teile radial wirkenden Spannungen eliminiert sind, und somit eine exakte Erfassung der Winkelstellung der Antriebswelle durch die Kodiereinrichtung gewährleistet ist.

Die Erfindung wird nachstehend anhand eines Ausführungsbeispiels in Verbindung mit der Zeichnung näher beschrieben. Es zeigt

Fig. 1 in einer schematischen perspektivischen Ansicht die Anordnung einer Winkel-Kodiereinrichtung an einer Antriebswelle für die Elevations-Bewegung optischer Geräte;

Fig. 2 eine in größerem Maßstab dargestellte Schnittansicht der Kodiereinrichtung mit der durch einen Ausgleichsring an der Antriebswelle befestigten Kodierscheibe;

Fig. 3 ein in Seitenansicht dargestelltes Teilstück des Ausgleichsringes, und

Fig. 4 den in größerem Maßstab und im Profilschnitt dargestellten Ausgleichsring.

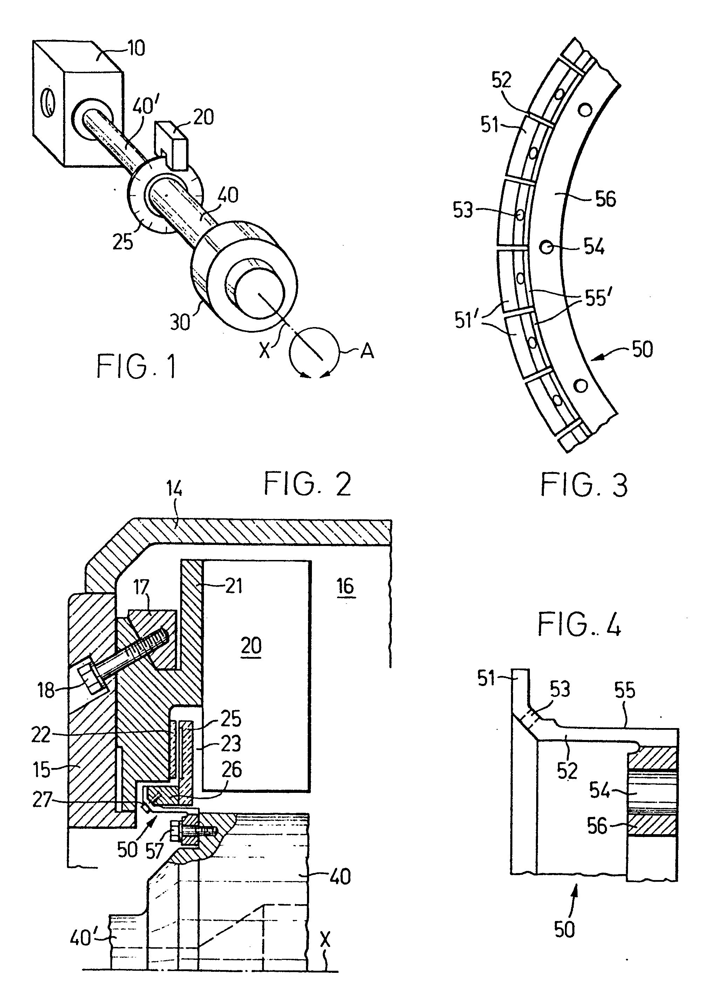

Fig. 1 zeigt in perspektivischer Ansicht eine Antriebswelle 40 mit einem an dem einen Wellenende 40' angeordneten optischen Empfänger 10 eines nicht dargestellten Beobachtungsperiskops. An dem anderen Ende der Welle 40 ist ein schematisch dargestelltes Antriebs-Aggregat 30 für die Schwenkbewegung des Empfängers 10 um die Elevations-Kippachse X in Pfeilrichtung A vorgesehen. Zur Erfassung der Schwenkbewegung des Empfängers beziehungsweise der Welle ist eine schematisch dargestellte Winkel-Kodiereinrichtung 20 vorgesehen, welche, wie in Fig. 2 dargestellt, in einer durch eine Abdeckung 14 verschließbare Ausnehmung 16 eines nicht näher dargestellten Gehäuses angeordnet und einer mit der Welle 40 drehfest verbundenen Kodierscheibe 25 zugeordnet ist.

In Fig. 2 ist in größerem Maßstab die an einem Tragelement 21 — mit nicht dargestellten Mitteln — befestigte Kodiereinrichtung 20 dargestellt, welche mittels eines Keilelements 17 und Schrauben 18 an einem Flanschteil 15 des Gehäuses befestigt ist. In dem Gehäuse ist außerdem in nicht näher dargestellter Weise die abgesetzt sowie vorzugsweise als Hohlwelle ausgebildete und durch das Antriebs-Aggregat 30 um die Kippachse X in Pfeilrichtung A schwenkbare Welle 40 gelagert. In einer zwischen dem Tragelement 21 und der Kodiereinrichtung 20 vorgesehenen ringförmigen Ausnehmung 23 ist die beispielsweise aus Glas hergestellte Kodierscheibe 25 angeordnet, welche mittels nicht dargestellter Mittel, zum Beispiel durch Kleben oder dergleichen, an einem Zwischenring 26 befestigt ist. Die Kodierscheibe 25 und der Zwischenring 26 sind mittels eines Ausgleichsringes 50 mit der Welle 40 drehfest verbunden, wobei der Ausgleichsring 50 mit am Umfang verteilt angeordneten Schrauben 57 an der Welle 40 und der die Kodierscheibe 25 tragende Zwischenring 26 mittels am Umfang verteilt angeordneter Schrauben 27 an dem Ausgleichsring 50 befestigt ist. In der Ausnehmung 23 ist außerdem ein in nicht dargestellter Weise an dem Tragelement 21 angeordnetes und der Kodierscheibe zugeordnetes, schematisch dargestelltes Ableseelement 22 vorgesehen.

Der in Fig. 4 im Profilschnitt dargestellte Ausgleichsring 50 ist im wesentlichen z-förmig und vorzugsweise einstückig ausgebildet und weist für die Befestigung der Kodierscheibe 25 einen ersten radial nach außen gerichteten Flansch 51 und in axialer Richtung versetzt dazu angeordnet einen für die Befestigung an der Antriebswelle 40 vorgesehenen zweiten radial nach innen gerichteten Flansch 56 auf. Ein zylindrisches Hülsenteil 55 verbindet den Flansch 51 mit dem Flansch 56.

Das zylindrische Hülsenteil 55 sowie der erste Flansch 51 sind, wie das in Fig. 3 dargestellte Ring-Teilstück zeigt, durch mehrere, vorzugsweise gleichmäßig am Umfang verteilte Schlitze 52 in einzelne Ring-Segmentteile 51', 55' unterteilt. In dem ersten Flansch 51 sind außerdem Öffnungen 53 für die Schrauben 27 und in dem zweiten Flansch 56 für die Schrauben 57 entsprechende Öffnungen 54 vorgesehen.

Aufgrund der besonderen Ausgestaltung und Anordnung des Ausgleichsringes 50, d. h., durch die starre Verbindung des zweiten Flansches 56 mit der Welle 40 für die exakte Drehbewegungs-Übertragung einerseits sowie durch das in Segmentteile 55' unterteilte Hülsenteil 55 und durch den ebenfalls in Segmentteile 51' unterteilten ersten Flansch 51 für die im wesentlichen starre Verbindung mit der Kodierscheibe 25 andererseits werden die radial wirkenden Kräfte, welche durch die unterschiedlichen Ausdehnungswerte der jeweiligen Materialien entstehen, weitestgehend aufgenommen.

## Patentansprüche

1. Anordnung zur steifen Verbindung zwischen einer Antriebswelle (40) und einer Kodierscheibe (25) aus Glas für die Winkel-Kodiereinrichtung (20) eines Beobachtungsperiskops, gekennzeichnet durch einen einerseits mit der Kodierscheibe (25) und andererseits mit der Antriebswelle (40) drehfest verbundenen Ausgleichsring (50), der einen radial nach außen gerichteten ersten Flansch (51) und in axialer Richtung versetzt dazu angeordnet einen radial nach innen gerichteten zweiten Flansch (56) sowie ein die beiden Flansche miteinander verbindendes zylindrisches Hülsenteil (55) aufweist, wobei der erste Flansch (51) und das Hülsenteil (55) durch mehrere am Umfang verteilte Schlitze (52) in einzelne Ringsegmente (51'; 55') unterteilt sind.

2. Anordnung nach Anspruch 1, dadurch gekennzeichnet, daß der Ausgleichsring (50) mit dem zweiten Flansch (56) an der Antriebswelle (40) und die vorzugsweise an einem Zwischenring (26) befestigte Kodierscheibe (25) an dem in Ringsegmente (51') unterteilten Flansch (51) befestigt ist.

3. Anordnung nach Anspruch 1, dadurch gekennzeichnet, daß der Ausgleichsring (50) einstückig ausgebildet ist.

## Claims

1. Arrangement for the rigid connection between an axle drive shaft (40) and a coding disc (25) of glass for the angle-coding device (20) of an observation periscope, characterized by a compensating ring (50) rigidly connected on the one hand to the coding disc (25) and on the other hand to the axle drive shaft (40), which ring has: a first flange (51) directed radially outwards; a second flange (56) arranged offset therefrom in the axial direction and directed radially inwards; and a cylindrical casing part (55) joining the two flanges together, wherein the first flange (51) and the casing part (55) are divided into individual annular segments (51', 55') by several slots (52) distributed along the circumference.

2. Arrangement according to claim 1, characterized in that the compensating ring (50) is secured with the second flange (56) on the axle drive shaft (40), and the coding disc (25) is secured on the flange (51) divided into annular segments (51'), preferably on an intermediate ring (26).

3. Arrangement according to claim 1, characterized in that the compensating ring (50) is made in one piece.

## Revendications

1. Montage pour la liaison rigide entre un arbre-moteur (40) et un disque de codage (25) en verre pour une installation de codage d'angle (20) d'un périscope d'observation, caractérisé par une bague de compensation (50) reliée solidairement en rotation d'une part au disque de codage (25) et d'autre part à l'arbre-moteur (40), bague qui comporte une première bride (51) dirigée radialement vers l'extérieur et décalée de façon axiale par rapport à celle-ci, une seconde bride (56) dirigée radialement vers l'intérieur, ainsi qu'une partie de douille (55), cylindrique reliant entre elles les deux brides, la première bride (51) et la partie de douille (55) étant subdivisées par plusieurs fentes (52) réparties à la périphérie en des segments d'anneau (51', 55') distincts.

2. Montage selon la revendication 1, caractérisé en ce que la bague de compensation (50) est fixée par la seconde bride (56) sur l'arbre-moteur (40) et le disque de codage (25) fixé de préférence à une bague intermédiaire (26) est fixé sur la bride (51) subdivisée en des segments d'anneau (51').

3. Montage selon la revendication 1, caractérisé en ce que la bague de compensation (50) est réalisé en une seule pièce.

0 042 916

FIG. 1

FIG. 2

FIG. 3

FIG. 4

5